# EUROPÄISCHE PATENTSCHRIFT

(11) **EP 3 208 105 B1**
(45) Veröffentlichungstag und Bekanntmachung des Hinweises auf die Patenterteilung: **02.12.2020**
(21) Anmeldenummer: 17154498.4
(22) Anmeldetag: 03.02.2017
(51) Int. Cl.: B60B 35/00, B60B 35/02, B60B 35/06, B60B 35/08

(54) **ACHSKÖRPER**
AXLE BODY
CORPS D'ESSIEU

(30) Priorität: 10.02.2016 CH 1722016
(43) Veröffentlichungstag der Anmeldung: 23.08.2017
(73) Patentinhaber: GF Casting Solutions Leipzig GmbH, 04249 Leipzig (DE)
(72) Erfinder: Hartmann, Stephan, 78244 Gottmadingen (DE); Kupferschmid, Roger, 8261 Hemishofen (CH); Braun, Gian, 8462 Rheinau (CH); Mahnig, Dominik, 8200 Schaffhausen (CH)
(74) Vertreter: Fenner, Seraina

(56) Entgegenhaltungen:
- EP-A1- 1 749 678
- EP-A2- 1 440 820
- DE-A1-102007 025 684
- DE-A1-102009 020 099
- JP-A- H07 215 004

## Beschreibung

Die Erfindung betrifft einen Achskörper aus Eisenguss für Kraftfahrzeuge vorzugsweise Nutzfahrzeuge einer nicht angetriebenen Achse und das Verfahren zur Herstellung beinhaltend eine Querverbindung, Anbindungsstellen und Federauflagen. Solche Achskörper sind aus dem Stand der Technik bekannt. Meist sind sie als Schmiedeteil ausgebildet, wobei auch Achskörper bekannt sind die mittels Ziehprozess hergestellt wurden.

Aufgrund der hohen Belastungen, die auf den Achskörper durch die statischen Kräfte, die durch das Gewicht des Fahrzeugs und ebenso die dynamischen Kräfte speziell in extremen Fahr- und Bremssituationen entstehen, sind die Achskörper entsprechend massiv ausgelegt und weisen dementsprechend meist ein unerwünscht hohes Gewicht auf.

Um den Anforderungen der Biege- und Torsionsfestigkeit zu entsprechen werden oft Doppel-T-Profile eingesetzt, die durch ihren entsprechend dimensionierten Querschnitt aufgrund der auftretenden Belastungen ein hohes Gewicht aufweisen. Die DE 10 2005 037 211 A1 offenbart einen Achskörper mit einem Doppel-T-Profil als Querschnitt und verstärkten Bereichen die hohen Belastungen unterliegen. Nachteilig hierbei ist, dass durch die verstärkten Bereiche das Gewicht des Achskörpers erhöht wird.

Die DE 10 2009 020 099 A1 offenbart einen Achskörper der ein Doppel -T oder U-Profil als Querschnitt aufweist und zu dessen Gewichtsreduktion Ausnehmungen eingebracht sind. Die JP H07215004 A offenbart einen Achskörper entweder teilweise mit Hohlquerschnitt und geschmiedet, oder gegossen und mit H-Profil. Die EP 1440 820 A2 offenbart einen Achskörper mit Hohlquerschnitt in drei Teilen.

Nachteilig hierbei ist der hohe Aufwand zur Herstellung des Achskörpers im Schmiedeverfahren.

Aufgabe der Erfindung ist es einen Achskörper und ein damit verbundenes Verfahren zu dessen Herstellung vorzuschlagen, der den Belastungen stand hält und ein möglichst geringes Gewicht aufweist wie auch kostengünstig in der Herstellung ist.

Die Aufgabe wird erfindungsgemäss dadurch gelöst, dass die Querverbindung des Achskörpers als Hohlkörper ausgebildet ist und der Achskörper im Eisengussverfahren hergestellt wird.

Der Achskörper ist als einteiliges Eisengussstück ausgebildet und beinhaltet eine Querverbindung, die sich zwischen den Anbindungsstellen erstreckt. Die Anbindungsstellen dienen der beidseitigen Radanbindung, sie können zur Aufnahme von lenkbaren Aufhängungsteilen eines rechten und linken Rades vorzugsweisen Vorderrads ausgebildet sein wie auch für nicht lenkbare Aufhängungsteile bzw. Räder.

Die sich zwischen den Anbindungsstellen erstreckende Querverbindung ist als Hohlkörper ausgebildet. Der Hohlkörper weist als Querschnitt einen Vierkant vorzugsweise ein Rechteck auf. Die Ecken des Querschnitts und somit die Kanten, die sich entlang der Querverbindung erstrecken sind vorzugsweise abgerundet bzw. weisen einen Radius auf.

Durch die hohl ausgebildete Querverbindung ist der Querschnitt als hohler Vierkant bzw. hohles Rechteck ausgebildet wodurch ein hohes Widerstandsmoment gewährleistet ist. Zudem kann durch die hohle Ausgestaltung der Querverbindung trotz Material- und demzufolge Gewichtseinsparung ein Widerstandsmoment erreicht werden, das einem massiven Achskörper ohne Hohlraum entspricht. Mittels des erfindungsgemässen Achskörpers kann die geforderte Biege-und Torsionsfestigkeit mit geringem Gewicht erreicht wird.

An der Querverbindung sind vorzugsweise zwei Federauflagen angeordnet an denen bspw. Federn montiert werden können um den Achskörper federnd mit der Karosserie des Kraftfahrzeugs zur verbinden.

Der Achskörper ist vorzugsweise symmetrisch in Bezug auf die Fahrtrichtung aufgebaut.

Der Achskörper ist vorzugsweise als Vorderachse eines Kraftfahrzeugs ausgebildet.

Die Querverbindung weist Kernöffnungen auf. Diese dienen einerseits der Abstützung des Kerns in der Gussform und andererseits der Entleerung des Kernsands nach dem Giessen des Achskörpers.

Vorzugsweise sind die Kernöffnungen rund oder als Langloch ausgebildet wodurch keine Spannungsspitzen im Lastfall um die Kernöffnungen entstehen, sondern ein gleichmässiger Spannungsverlauf über den Achskörper erfolgt.

Der Achskörper bzw. die Querverbindung weist mindestens drei Kernöffnungen auf. Als bevorzugte Ausgestaltung sind die Kernöffnungen auf mindestens zwei Seiten des Querverbinders angeordnet. Dies kommt daher, dass der Kern möglichst optimal in der Gussform abgestützt sein sollte.

Der erfindungsgemässe Achsenkörper wird im Eisengiessverfahren hergestellt. Als bevorzugtes Eisengiessverfahren wird das Sandgussverfahren angewandt, speziell bevorzugt Grünsand.

Ein Ausführungsbeispiel der Erfindung wird anhand der Figuren beschrieben, wobei sich die Erfindung nicht nur auf das Ausführungsbeispiel beschränkt. Es zeigen:
- Fig. 1: eine dreidimensionale Ansicht eines erfindungsgemässen Achskörpers,
- Fig. 2: eine Draufsicht eines erfindungsgemässen Achskörpers,
- Fig. 3: eine Schnittansicht durch einen erfindungsgemässen Achskörper im Bereich von Kernöffnungen und
- Fig. 4: eine Schnittansicht durch einen erfindungsgemässen Achskörper.

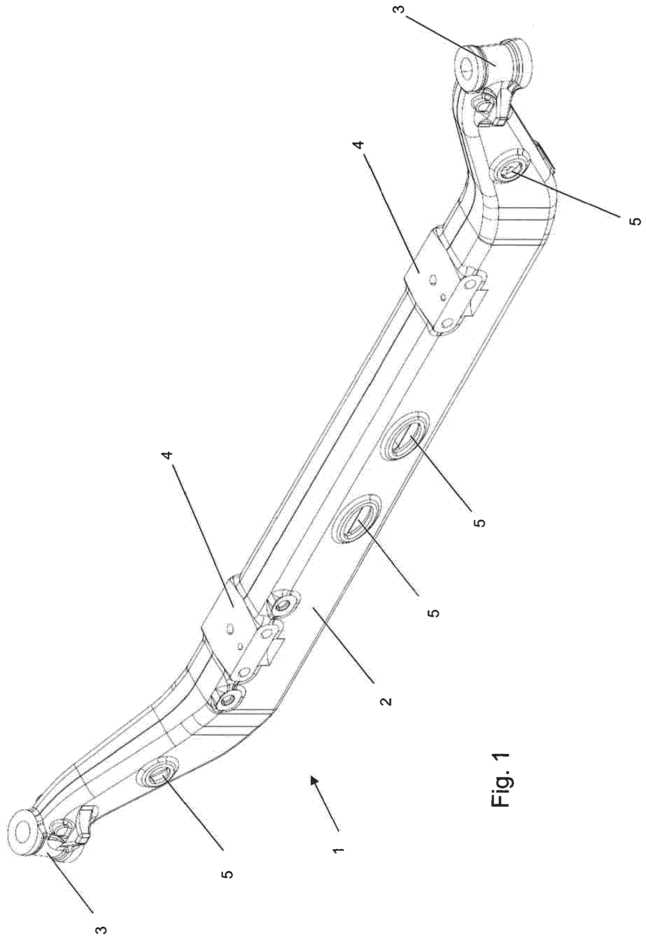

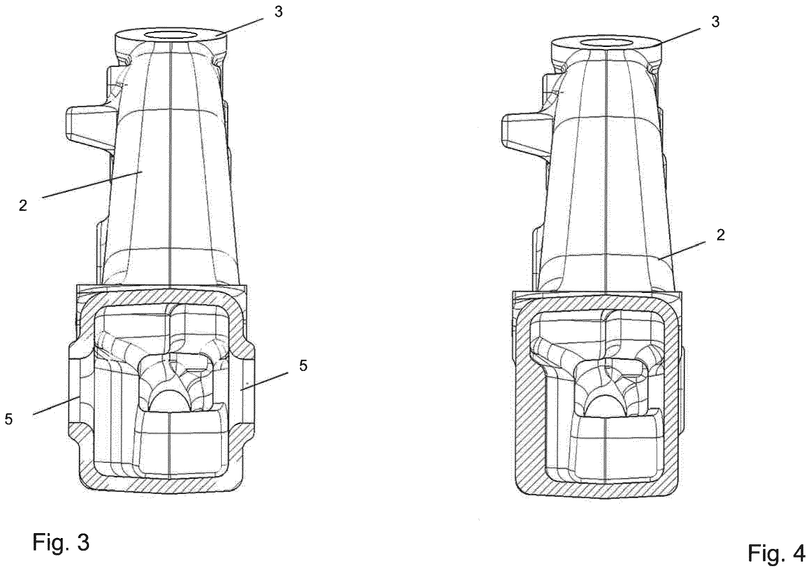

Fig. 1 zeigt eine dreidimensionale Ansicht eines erfindungsgemässen Achskörpers 1 aus Eisenguss. Der erfindungsgemässe Achskörper 1 wird für Kraftfahrzeuge vorzugsweise Nutzfahrzeuge eingesetzt. Der Achskörper erstreckt sich zwischen den beiden Radanbindungen und ist vorzugsweise als einteiliges Eisengussteil ausgebildet. Der Achskörper 1 beinhaltet eine Querverbindung 2, die sich zwischen zwei Anbindungsstellen 3 erstreckt und Federauflagen 4. Die Anbindungsstellen 3 können für lenkbare Aufhängungsteile wie auch für nicht lenkbare Aufhängungsteile ausgebildet sein, wobei die in den Fig. 1-4 abgebildete Variante mit Anbindungsstellen 3 für lenkbare Aufhängungsteile ausgebildet ist.
Um Gewicht einzusparen aber dennoch der geforderten Festigkeit bzw. Biege- und Torsionsfestigkeit zu entsprechen ist die Querverbindung 2, die sich zwischen den Anbindungsstellen 3 erstreckt als Hohlkörper ausgebildet. Durch die hohle Ausgestaltung der Querverbindung 2 kann das Gewicht reduziert werden und das Widerstandsmoment der Querverbindung 2 bzw. des Achskörpers 1 dennoch im selben bzw. ähnlichen Umfang beibehalten werden.
Am Achskörper 1 angeordnet sind Federauflagen 4, welche zur Verbindung des Achskörpers 1 mit der Karosserie eines Kraftfahrzeugs dienen indem Federn oder Dämpferelemente an den Federauflagen 4 angebracht sind, die den Achskörper 1 federnd mit der Karosserie verbinden.

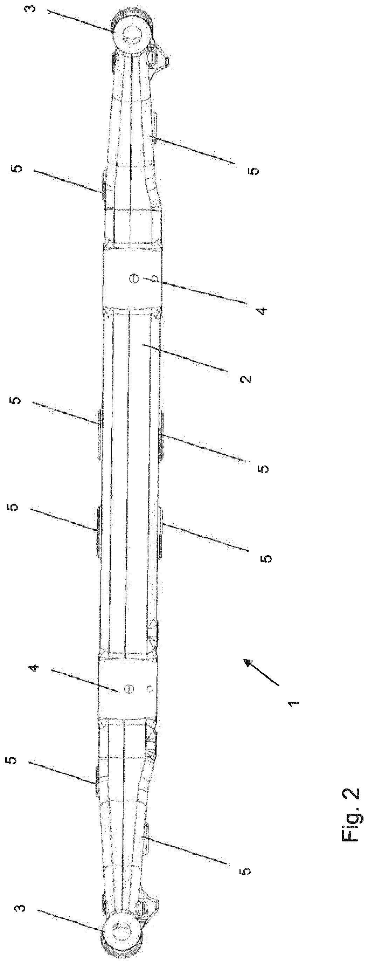

Fig. 2 zeigt den erfindungsgemässen Achskörper 1 von oben. Vorzugsweise ist der Achskörper 1 entlang der Fahrtrichtung des Kraftfahrzeugs spiegelsymmetrisch aufgebaut.
Die Querverbindung 2 des Achskörpers 1 weist vorzugsweise einen Querschnitt auf der als Vierkant vorzugsweises Rechteck ausgebildet ist. In Fig. 3 und 4 sind Schnittansichten dargestellt, die den Querschnitt der Querverbindung 2 an zwei unterschiedlichen Stellen zeigen. Fig. 3 zeigt eine Schnittansicht im Bereich einer Kernöffnung 5 und Fig. 4 zeigt eine Schnittansicht in einem Bereich wo keine Kernöffnung 5 angeordnet ist. In Fig. 3 und 4 ist der Querschnitt der Querverbindung 5 ersichtlich der als Vierkant vorzugsweise als Rechteck ausgebildet ist. Die Wandstärke der Querverbindung 2 ist möglichst konstant ausgebildet. Die Wandstärke bzw. die Dimension des Hohlraums der Querverbindung ist derart ausgebildet, dass sich das Widerstandsmoment im Vergleich zu einer Querverbindung aus Vollmaterial nur geringfügig bzw. kaum verändert.
Die Ecken bzw. die Kanten, die sich entlang der Querverbindung erstrecken sind vorzugsweise abgerundet. Dies ist auch gut in den Fig. 3 und 4 erkennbar in denen die äusseren Ecken als Radius ausgebildet sind.
Der Achskörper 1 weist Kernöffnungen 5 auf. Die Kernöffnungen 5 dienen einerseits der Abstützung des Kerns in der Gussform und andererseits der Entleerung des Kernsands nach dem Giessvorgang.

Die Kernöffnungen 5 sind vorzugsweise rund oder als Langloch ausgebildet wie auch in Fig. 1 gut erkennbar ist können die Kernöffnungen 5 unterschiedlich ausgebildet sein sowohl in Grösse als auch Form.

Der Achskörper 1 weist vorzugsweise mindestens drei Kernöffnungen 5 auf. Die Kernöffnungen sind mindestens auf zwei Seiten des Achskörpers 1 angeordnet, so dass der Kern stabil der der Gussform liegen kann.

Der erfindungsgemässe Achskörper 1 wir durch das Eisengussverfahren hergestellt um die benötigten Festigkeitswerte zu erreichen.
Vorzugsweise ist der Achskörper 1 im Sandgussverfahren speziell bevorzugt im Grünsandverfahren hergestellt.

### Bezugszeichenliste

- 1: Achskörper
- 2: Querverbindung
- 3: Anbindungsstelle
- 4: Federauflage
- 5: Kernöffnung

## Patentansprüche

1. Achskörper (1) für Kraftfahrzeuge vorzugsweise Nutzfahrzeuge einer nicht angetriebenen Achse, wobei der Achskörper (1) als einteiliges Eisengussstück ausgebildet ist beinhaltend eine Querverbindung (2), Anbindungsstellen (3) und Federauflagen (4), **dadurch gekennzeichnet, dass** sich die zwischen den Anbindungsstellen (3) erstreckende Querverbindung (2) als Hohlkörper ausgebildet ist.

2. Achskörper (1) nach Anspruch 1, **dadurch gekennzeichnet, dass** der Achskörper (1) als Vorderachse ausgebildet ist.

3. Achskörper (1) nach einem der Ansprüche 1 oder 2, **dadurch gekennzeichnet, dass** der Querschnitt der Querverbindung (2) als Vierkant vorzugsweise Rechteck ausgebildet ist.

4. Achskörper (1) nach einer der Ansprüche 1 bis 3, **dadurch gekennzeichnet, dass** in der Querverbindung (2) Kernöffnungen (5) angeordnet sind.

5. Achskörper (1) nach einem der Ansprüche 1 bis 4, **dadurch gekennzeichnet, dass** die Kernöffnungen (5) rund oder als Langloch ausgebildet sind.

6. Achskörper (1) nach einem der Ansprüche 1 bis 5, **dadurch gekennzeichnet, dass** mindestens drei Kernöffnungen (5) in der Querverbindung (2) angeordnet sind.

7. Achskörper (1) nach Anspruch 6, **dadurch gekennzeichnet, dass** die Kernöffnungen (5) unterschiedliche Formen und Grössen aufweisen können.

8. Achskörper (1) nach Anspruch 6 oder 7, **dadurch gekennzeichnet, dass** die Kernöffnungen (5) auf mindestens zwei Seiten des Querverbinders (2) angeordnet sind.

9. Verfahren zur Herstellung eines Achskörpers (1) nach einem der Ansprüche 1 bis 8, **dadurch gekennzeichnet, dass** der Achskörper (1) im Eisengussverfahren hergestellt wird.

10. Verfahren nach Anspruch 9, **dadurch gekennzeichnet, dass** der Achskörper (1) im Sandgussverfahren vorzugsweise Grünsand hergestellt wird.

## Claims

1. Axle beam (1) for motor vehicles, preferably utility vehicles, of a non-driven axle, the axle beam (1) being configured as a single-piece cast iron piece, comprising a transverse connection (2), attachment points (3) and spring supports (4), **characterized in that** the transverse connection (2) which extends between the attachment points (3) is configured as a hollow body.

2. Axle beam (1) according to Claim 1, **characterized in that** the axle beam (1) is configured as a front axle.

3. Axle beam (1) according to either of Claims 1 and 2, **characterized in that** the cross section of the transverse connection (2) is configured as a square, preferably a rectangle.

4. Axle beam (1) according to one of Claims 1 to 3, **characterized in that** core openings (5) are arranged in the transverse connection (2).

5. Axle beam (1) according to one of Claims 1 to 4, **characterized in that** the core openings (5) are configured to be round or as a slot.

6. Axle beam (1) according to one of Claims 1 to 5, **characterized in that** at least three core openings (5) are arranged in the transverse connection (2).

7. Axle beam (1) according to Claim 6, **characterized in that** the core openings (5) can have different shapes and sizes.

8. Axle beam (1) according to Claim 6 or 7, **characterized in that** the core openings (5) are arranged on at least two sides of the transverse connector (2).

9. Method for producing an axle beam (1) according to one of Claims 1 to 8, **characterized in that** the axle beam (1) is produced during the iron casting method.

10. Method according to Claim 9, **characterized in that** the axle beam (1) is produced using the sand casting method, preferably greensand.

## Revendications

1. Corps d'essieu (1) pour des véhicules automobiles, de préférence des véhicules utilitaires, d'un essieu non entraîné, le corps d'essieu (1) étant réalisé sous la forme d'une pièce en fonte intégrale, comprenant une traverse (2), des points d'attache (3) et des butées de ressort (4), **caractérisé en ce que** la traverse (2) s'étendant entre les points d'attache (3) est réalisée sous la forme d'un corps creux.

2. Corps d'essieu (1) selon la revendication 1, **caractérisé en ce que** le corps d'essieu (1) est réalisé sous la forme d'un essieu avant.

3. Corps d'essieu (1) selon l'une quelconque des revendications 1 ou 2, **caractérisé en ce que** la section transversale de la traverse (2) est réalisée sous forme de carré, de préférence sous forme de rectangle.

4. Corps d'essieu (1) selon l'une quelconque des revendications 1 à 3, **caractérisé en ce que** des ouvertures centrales (5) sont disposées dans la traverse (2) .

5. Corps d'essieu (1) selon l'une quelconque des revendications 1 à 4, **caractérisé en ce que** les ouvertures centrales (5) présentent une forme circulaire ou de trou oblong.

6. Corps d'essieu (1) selon l'une quelconque des revendications 1 à 5, **caractérisé en ce qu'**au moins trois ouvertures centrales (5) sont disposées dans la traverse (2) .

7. Corps d'essieu (1) selon la revendication 6, **caractérisé en ce que** les ouvertures centrales (5) peuvent présenter différentes formes et tailles.

8. Corps d'essieu (1) selon la revendication 6 ou 7, **caractérisé en ce que** les ouvertures centrales (5) sont disposées sur au moins deux faces de la traverse (2).

9. Procédé de fabrication d'un corps d'essieu (1) selon l'une quelconque des revendications 1 à 8, **caractérisé en ce que** le corps d'essieu (1) est fabriqué dans un procédé de fonte.

10. Procédé selon la revendication 9, **caractérisé en ce que** le corps d'essieu (1) est fabriqué dans un procédé de coulage en sable, de préférence en sable vert.
